# EUROPÄISCHE PATENTSCHRIFT

(11) **EP 0 770 314 B1**
(45) Veröffentlichungstag und Bekanntmachung des Hinweises auf die Patenterteilung: **13.01.1999**
(21) Anmeldenummer: 95921721.7
(22) Anmeldetag: 22.06.1995
(51) Int. Cl.: H04Q 7/36, H04Q 7/30, H04B 7/26

(54) **BASISSTATIONSSYSTEM FÜR EIN DIGITALES ZELLULARES MOBILFUNKNETZ**
BASE STATION SYSTEM FOR A DIGITAL CELLULAR MOBILE RADIOTELEPHONE NETWORK
SYSTEME DE STATION DE BASE POUR RESEAU RADIOTELEPHONIQUE CELLULAIRE NUMERIQUE MOBILE

(30) Priorität: 08.07.1994 DE 4424016
(43) Veröffentlichungstag der Anmeldung: 02.05.1997
(73) Patentinhaber: ROBERT BOSCH GMBH, 70442 Stuttgart (DE)
(72) Erfinder: BUDNIK, Norbert, D-71522 Backnang (DE)
(86) Internationale Anmeldenummer: DE9500812
(87) Internationale Veröffentlichungsnummer: WO9602116

(56) Entgegenhaltungen:
- EP-A- 0 335 846
- EP-A- 0 368 673
- WO-A-92/13400

## Beschreibung

Die vorliegende Erfindung betrifft ein Basisstationssystem für ein digitales zellulares Mobilfunknetz, wobei in den Funkzellen Sende-/Empfangseinrichtungen installiert sind und jeweils mehrere Sende-/Empfangseinrichtungen an eine Basisstationssteuereinheit angeschlossen sind.

Ein derartiges Basisstationssystem, wie es z.B. in digitalen zellularen Mobilfunknetzen nach dem GSM Standard benutzt wird, geht beispielsweise aus der DE 40 08 165 Al oder der DE 42 15 685 Al hervor. Wie auch bei M. Böhm: Mobilfunksystem CD 900 (Teil 1) in Mikrowellen Magazin, Vol. 11, No. 1, 1985, S. 67-70 beschrieben, ist der gesamte Funkverkehrsbereich in Funkzellen aufgeteilt und in jeder Funkzelle eine Feststation installiert. Für jede der Funkzellen ist für den Datenaustausch zwischen der Feststation und den sich in der Funkzelle aufhaltenden mobilen Teilnehmern eine fest vorgegebene Anzahl von TDMA Zeitschlitzen vorgesehen. In Gebieten mit hoher Verkehrsdichte werden kleine Funkzellen benötigt, wogegen mit abnehmender Verkehrsdichte die Funkzellen großflächiger sein können. Da in Teilbereichen einer großen Funkzelle unterschiedliche Verkehrsdichten auftreten können, ist gemäß der genannten Veröffentlichung jede Funkzelle sektoriell in mehrere Teilzellen aufgeteilt, die alle zeitlich nacheinander von einer Feststation aus versorgt werden. Eine flexible Anpassung an die unterschiedlichen Verkehrsdichten in den einzelnen Teilzellen geschieht hier durch eine entsprechende zahlenmäßige Zuordnung der für eine Funkzelle insgesamt zur Verfügung stehenden TDMA Zeitschlitze auf die einzelnen Teilzellen.

Gemäß der DE 42 25 685 A1 erfolgt eine Anpassung der Funkzellengröße an die gegebene Verkehrsdichte durch Steuerung der Sendeleistung der Feststationen.

Die genannten Verfahren zur Anpassung der Funkzellen an die vorherrschende Verkehrsdichte sind in ihren Variationsmöglichkeiten sehr beschränkt.

Der Erfindung liegt daher die Aufgabe zugrunde, ein Basisstationssystem der einleitend genannten Art anzugeben, das mit geringem Aufwand sehr flexibel an örtliche Verkehrsdichten angepaßt werden kann.

Erfindungsgemäß wird diese Aufgabe durch die Merkmale des Anspruchs 1 gelöst. Vorteilhafte Weiterbildungen der Erfindung gehen aus den abhängigen Ansprüchen hervor.

Dadurch, daß die im gesamten Funkverkehrsbereich verteilten Feststationen als Sende-/Empfangseinrichtungen ausgebildet sind, die nur die Umsetzung der auszusendenden Daten in den Hochfrequenzbereich auszuführen haben und die sonstige Signalverarbeitung in zentralen Basisstationssteuereinheiten erfolgt, reduzieren sich der Schaltungsaufwand und damit die Kosten für die Sende-/Empfangseinrichtungen erheblich, zumal alle Sende-/Empfangseinrichtungen gleichartig aufgebaut sein können. Diese an sich aus der DE 40 08 165 A1 bekannte Maßnahme spricht dafür, den Funkverkehrsbereich mit einer Vielzahl solcher gleichartiger Sende-/Empfangseinrichtungen auszustatten, von denen jede eine relativ kleine Zelle mit nur einigen hundert Metern Durchmesser abdeckt.

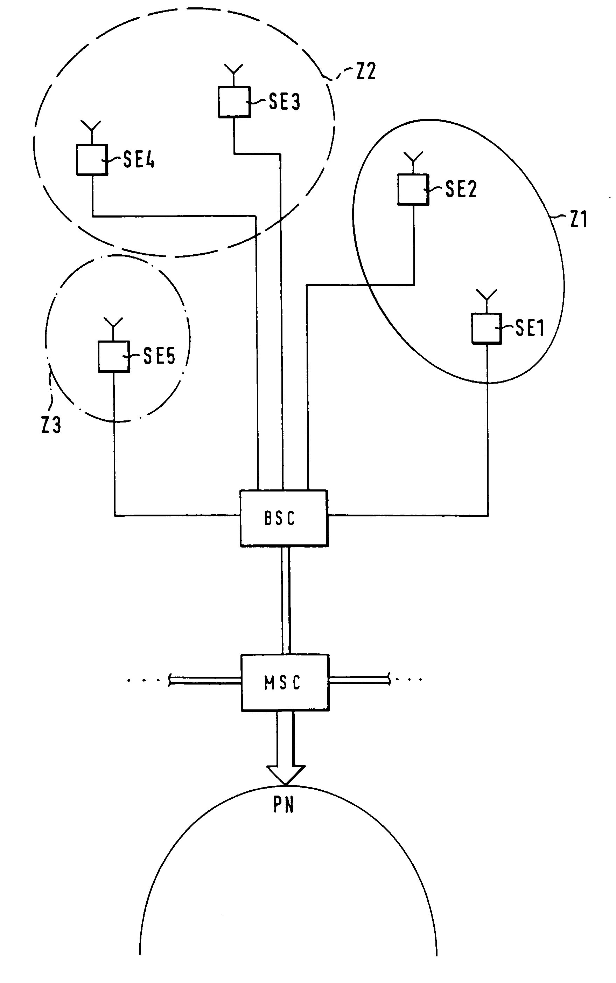

Anhand eines in der Zeichnung dargestellten Ausführungsbeispiels wird nun die Erfindung näher erläutert.

In der einzigen Figur der Zeichnung ist ein Ausschnitt eines digitalen zellularen Mobilfunknetzes dargestellt. Es besitzt üblicherweise mindestens ein Mobilfunkvermittlungszentrum MSC, das die Vermittlung zwischen einem oder mehreren festen öffentlichen oder privaten Netzen PN und dem Mobilfunknetz übernimmt. Mit diesem Mobilfunkvermittlungszentrum MSC sind ein oder mehrere Basisstationssteuereinheiten BSC verbunden, an die wiederum mehrere im Funkverkehrsbereich verteilt angeordnete Sende-/Empfangseinrichtungen SE1 ... SE5 angeschlossen sind.

Die Sende-/Empfangseinrichtungen SE1 ... SE5 sind auf ein Minimum an Signalverarbeitungsfunktionen reduziert und sind alle gleichartig aufgebaut, was eine preiswerte Massenherstellung ermöglicht. In den Sende/Empfangseinrichtungen SE1 ... SE5 soll ausschließlich die Verarbeitung der Signale im Hochfrequenzbereich (z.B. Modulation, Demodulation, Frequenzumsetzung, Senden, Empfangen etc.) erfolgen. Alle anderen Funktionen (z.B. Kanalcodierung, -decodierung, Multiplexen, Demultiplexen, Steuerung von Frequenzsprungprozeduren, Überwachung, Steuerung und Vermittlung für die Sende/Empfangseinrichtungen etc.) sollen die Basisstationssteuereinheiten BSC ausüben.

Die Sende-/Empfangseinrichtungen SE1 ... SE5 sind in so geringen Abständen voneinander angeordnet, daß die einzelne Sende-/Empfangseinrichtung eine so feine Funkzellenstruktur bilden, daß der Funkkanalbedarf auch bei der höchstmöglichen Verkehrsdichte abgedeckt werden kann und außerdem eine optimale Funkversorgung in geographisch ungünstigen Gebieten gewährleistet ist. Wegen der kleinen Funkzellengröße benötigen die Sende-/Empfangseinrichtungen SE1 ... SE5 auch nur eine relativ geringe Sendeleistung.

Jede Sende-/Empfangseinrichtung SE1 ... SE5 ist mit mehreren (z.B. vier), verschiedenen Frequenzkanälen zugeordneten Sendern bzw. Empfängern ausgestattet.

Die Basisstationssteuereinheit BSC ist in der Lage, jede einzelne Sende-/Empfangseinrichtung SE1 ... SE5 getrennt mit Sendedaten zu versorgen. Dieser Selektivbetrieb wird angewendet, wenn eine große Verkehrsdichte nur mit vielen kleinen Funkzellen bewältigt werden kann. Außerdem kann die Basisstationssteuereinheit beliebig viele der mit ihr verbundenen Sende-/Empfangseinrichtungen SE1 ... SE5 parallel schalten. In dieser Betriebsart werden also mehrere Sende-/Empfangseinrichtungen SE1 ... SE5 von der Basisstationssteuereinheit mit denselben Sendedaten versorgt, und diese parallelgeschalteten Sende/Empfangseinrichtungen senden dann die Daten gleichzeitig im Gleichwellenbetrieb aus.

Wie in der Zeichnung angedeutet, versorgen die jeweils parallelgeschalteten Sende-/Empfangseinrichtungen eine gemeinsame Funkzelle, z.B. die Sende-/Empfangseinrichtungen SE1, SE2 die Funkzelle Z1 oder die Sende/Empfangsvorrichtungen SE3, SE4 die Funkzelle Z2. Die Sende/Empfangseinrichtung SE5 ist hier beispielhaft einzeln betrieben und bildet eine kleine Funkzelle Z3. Der Gleichwellenbetrieb bietet also die Möglichkeit, die Funkzellengrößen an die Verkehrsdichte oder die geographischen Möglichkeiten so anzupassen, daß eine optimale Funkversorgung gegeben ist.

Im Gleichwellenbetrieb empfangen alle parallelgeschalteten Sende-/Empfangseinrichtungen dieselben Daten. Die Basisstationssteuereinheit BSC kann dann alle diese von verschiedenen Sende-/Empfangseinrichtungen stammenden Empfangsdaten nach dem Raumdiversityprinzip kombinieren.

Als Übertragungsmedium zwischen den Sende/Empfangseinrichtungen SE1 ... SE5 und der Basisstationssteuereinheit BSC können Kupferkabel, Lichtwellenleiter oder Richtfunkverbindungen eingesetzt werden. Zweckmäßig wäre es, ein Punkt-zu-Mehrpunktübertragungssystem einzurichten.

## Patentansprüche

1. Basisstationssystem für ein digitales zellulares Mobilfunknetz, wobei in den Funkzellen Sende/Empfangseinrichtungen installiert sind und jeweils mehrere Sende-/Empfangseinrichtungen an eine Basisstationssteuereinheit angeschlossen sind, dadurch gekennzeichnet, daß über die Basisstastionssteuereinheit (BSC) die mit ihr verbundenen Sende-/Empfangseinrichtungen (SE1 ... SE5) in beliebigen Kombinationen parallel schaltbar sind, so daß sie dieselben von der Basisstationssteuereinheit (BSC) gelieferten Daten im Gleichwellenbetrieb aussenden.

2. Basisstationssystem nach Anspruch 1, dadurch gekennzeichnet, daß die Sende-/Empfangseinrichtungen (SE1 ... SE5) ausschließlich Baugruppen enthalten für die Signalverarbeitung im Hochfrequenzbereich.

3. Basisstationssystem nach Anspruch 1 oder 2, dadurch gekennzeichnet, daß die Sende-/Empfangseinrichtungen (SE1 ... SE5) jeweils mit mehreren verschiedenen Frequenzkanälen zugeordneten Sendern und Empfängern ausgestattet sind.

4. Basisstationssystem nach Anspruch 1, dadurch gekennzeichnet, daß die Basisstationssteuereinheiten (BSC) die Sendedaten soweit aufbereiten, daß in den Sende/Empfangseinrichtungen (SE1 ... SE5) nur noch die Modulation und Umsetzung der Sendedaten in HochfrequenzÜbertragungssignale erforderlich ist.

5. Basisstationssystem nach Anspruch 1, dadurch gekennzeichnet, daß die Übertragung der Signale von den Basisstationssteuereinheiten (BSC) zu den Sende/Empfangseinrichtungen (SE1 ... SE5) über ein Punkt-zu-Mehrpunktübertragungssystem erfolgt.

## Claims

1. Base station system for a digital cellular mobile radio network, transmitting/receiving devices being installed in the radio cells and a plurality of transmitting/receiving devices in each case being connected to a base station control unit, characterized in that, via the base station control unit (BSC), the transmitting/receiving devices (SE1 ... SE5) which are connected to it can be connected in parallel in any required combinations, so that they transmit the same data supplied from the base station control unit (BSC) in the common-frequency mode.

2. Base station system according to Claim 1, characterized in that the transmitting/receiving devices (SE1 ... SE5) contain exclusively assemblies for signal processing in the radio-frequency band.

3. Base station system according to Claim 1 or 2, characterized in that the transmitting/receiving devices (SE1 ... SE5) are each equipped with transmitters and receivers which are allocated to a plurality of different frequency channels.

4. Base station system according to Claim 1, characterized in that the base station control units (BSC) preprocess the transmitted data to such an extent that all that is required in the transmitting/receiving devices (SE1 ... SE5) is modulation and conversion of the transmitted data into radio-frequency transmission signals.

5. Base station system according to Claim 1, characterized in that the signals are transmitted from the base station control units (BSC) to the transmitting/receiving devices (SE1 ... SE5) via a point-to-multipoint transmission system.

## Revendications

1. Système de station de base pour réseau radiotéléphonique cellulaire numérique mobile, comprenant dans chaque cellule radiotéléphonique des émetteurs/récepteurs installés, dont plusieurs sont reliés à une unité de commande de la station de base,
caractérisé en ce que
par l'intermédiaire de l'unité de commande de la station de base (BSC) à laquelle ils sont reliés, des dispositifs émetteurs/récepteurs (SE1...SE5) peuvent être combinés à volonté en parallèle de manière à ce qu'ils émettent en fréquence commune les données qu'ils reçoivent de l'unité de commande de la station de base.

2. Système selon la revendication 1,
caractérisé en ce que
les émetteurs/récepteurs (SE1...SE5) contiennent exclusivement des équipements servant au traitement du signal dans le domaine des hautes fréquences.

3. Système selon la revendication 1 ou 2,
caractérisé en ce que
les émetteurs/récepteurs (SE1...SE5) sont constitués chacun d'émetteurs et de récepteurs associés à plusieurs canaux de fréquence différents.

4. Système selon la revendication 1,
caractérisé en ce que
les unités de commande de la station de base (BSC) préparent les données qu'elles envoient de manière que les dispositifs émetteurs/récepteurs (SF1...SF5) aient seulement à faire subir à ces données une modulation et une conversion en signaux de transmission à haute fréquence.

5. Système selon la revendication 1,
caractérisé en ce que
la transmission des signaux des unités de commande (BSC) aux émetteurs/récepteurs (SF1...SF5) est assurée par un système de transmission d'un point à plusieurs points.
